# EUROPEAN PATENT APPLICATION

(11) **EP 4 738 043 A1**
(43) Date of publication of application: **06.05.2026**
(21) Application number: 24210251.5
(22) Date of filing: 31.10.2024
(51) Int. Cl.: G05D 1/654, G05D 1/242, G05D 1/243, G05D 109/25, G05D 105/45, G05D 101/20, G05D 107/70, G05D 111/10

(54) **ASSISTED LANDING SYSTEM FOR AUTONOMOUS UAV OPERATIONS AND REPAIR ON WIND TURBINE BLADES**

(71) Applicant: Reblade ApS, 8544 Mørke Region Midtjylland (DK)
(72) Inventor: Westergaard, André Alexander, 8550 Ryomgaard (DK); Kjerstein, Frank, 8544 Mørke (DK); Zakovyrin, Taras, 8550 Ryomgaard (DK)
(74) Representative: Tahtadjiev, Konstantin

(57) **Abstract**

The invention relates to an Assisted Landing System (ALS) designed for UAVs to land, stabilize, and maintain a secure position on the leading edge of wind turbine blades, facilitating in-situ maintenance and repair operations.
Unlike traditional UAV inspection systems, which focus solely on non-contact visual assessment, ALS enables precision contact for on-blade repair, significantly reducing operational risks and costs associated with manual blade maintenance. The system enables UAVs to support direct blade repair operations with accuracy and adaptability, expanding UAV applications within the wind turbine maintenance industry.

ALS incorporates a sensor array, including LIDAR, time-of-flight (ToF) cameras, and vision cameras, which work together to guide the UAV in aligning, approaching, and descending onto the blade.
The ALS features both operator-assisted and fully autonomous modes, allowing flexible operation based on environmental conditions and operator input.
Once landed, an edge stabilization system engages, maintaining UAV stability against wind and blade movement, essential for performing repair tasks in challenging environments.

## Description

### TECHNICAL FIELD

This invention pertains to the field of autonomous unmanned aerial vehicles (UAVs) and, more specifically, to an Assisted Landing System (ALS) that enables a UAV to land, stabilize, and perform maintenance on the leading edge of wind turbine blades. The ALS is designed to support precise alignment, controlled descent, and secure positioning, ensuring effective UAV-based maintenance on turbine blades exposed to variable environmental conditions.

### BACKGROUND OF THE INVENTION

Wind turbine blades endure significant environmental stresses, leading to erosion and wear that compromise efficiency and structural integrity over time. The leading edge of the blade suffers from impacts by rain, airborne particles, and wind, requiring frequent maintenance to preserve optimal turbine performance. Conventional repair methods rely heavily on manual labor with rope access, which are costly, time-consuming, and heavily dependent on weather conditions.

Existing UAV technologies primarily support non-contact imaging for inspection purposes, focusing on visual data collection rather than direct repair. For example, **Toshiba's patent (**JP 2023-72592 A**)** describes a UAV system with gimbaled cameras designed to inspect floating offshore wind turbines by tracking blade movements and using predictive control to maintain a fixed position relative to moving blades. The **SkySpecs patent (**WO 2016200629 A1**)** similarly outlines UAV inspection methods for blade condition monitoring, focusing on non-contact imaging to avoid the risks associated with physical contact during blade inspection.

Further, previous innovations, such as the **Reblade patent (**WO 2023072356 A1**),** focus on advancing blade repair processes through specialized coating and erosion-resistant solutions for structural maintenance. While Reblades system addresses effective erosion mitigation on turbine blades, it does not fully encompass UAV-assisted landing and stabilization on the blade's narrow leading edge. In contrast, the ALS introduces a UAV landing and stabilization system that allows unmanned aerial vehicle (UAV) s to make secure contact with the blade's leading edge, providing a stable platform for repair operations-a capability not covered in existing inspection or repair-focused patents.

The ALS thus fills a significant gap between UAV-based inspection systems and hands-on blade repair methods, facilitating stable landings and in-place repair for improved maintenance efficiency and safety.

### SUMMARY OF THE INVENTION

The Assisted Landing System (ALS) is an advanced UAV-based system designed to enable precise alignment, landing, and stabilization on the leading edge of wind turbine blades, facilitating maintenance tasks. The ALS builds upon previous blade maintenance advancements, including those described in the Reblade patent, by adding direct-contact UAV-based capabilities to perform repairs on the blade's leading edge. Key features include:
1. **Sensor-Enhanced Alignment and Descent:** ALS uses LIDAR, ToF, and vision cameras to provide real-time data for alignment and controlled descent, even on narrow blade surfaces positioned at various angles.
2. **Dual-Mode Operation:** ALS includes both operator-assisted and fully autonomous modes. Operator-assisted mode leverages real-time data for manual adjustments, while autonomous mode allows ALS to independently control alignment, descent, and stabilization.
3. **Edge Stabilization:** Once positioned, ALS engages a stabilization feature that secures the unmanned aerial vehicle (UAV) on the blade's narrow edge, countering minor environmental effects to maintain positioning for repair. This stabilization feature represents an advancement beyond existing systems by providing a secure, stable platform for UAV-based maintenance tasks.

By combining Reblades system's repair principles with ALS's autonomous landing and stabilization, this invention addresses the need for efficient and reliable UAV-assisted maintenance directly on the blade surface, reducing downtime and enhancing safety.

The level of detail here is typically very similar to what goes into the claims.

### BRIEF DESCRIPTION OF THE DRAWINGS

1. **Fig. 1****:** Sensor Placement and Field of View (FOV) of ToF Cameras - illustrates the camera setup and FOV used to detect the wind turbine and the blade's leading edge.
2. **Fig. 2****:** LIDAR Placement on Unmanned aerial vehicle (UAV) - shows LIDAR units positioned for edge tracking and alignment.
3. **Fig. 3****:** Operator Repair Planner GUI Display - displays GUI for operator input, top view from vision cameras, and real-time monitoring.
4. **Fig. 4****:** Environment Recognition Visualization - provides side and top views for environment scanning and obstacle detection.
5. **Fig. 5****:** Positioning Above Blade (Front View) - depicts unmanned aerial vehicle (UAV) alignment above blade, preparing for controlled descent.
6. **Fig. 6****:** Blade Tip Detection and Descent Path - shows ALS locating the blade tip and calculating descent path.
7. **Fig. 7****:** Blade Tip Detection and Descent Path - shows ALS descending and correcting trajectory path to the blade tip.
8. **Fig. 8****:** Stabilized Unmanned aerial vehicle (UAV) on Blade - demonstrates ALS stabilizing the unmanned aerial vehicle (UAV) on the blade's leading edge.
9. **Fig. 9****:** System Block Diagram - provides an overview of ALS components, sensor networks, GUI, and operational flow.

### DETAILED DESCRIPTION OF EMBODIMENTS

The ALS procedure comprises a structured series of operational stages, utilizing navigation sensors, environment scanning, and adaptive stabilization to facilitate safe and stable landings on turbine blades. Each step is linked to specific figures (as placeholders) for detailed reference.

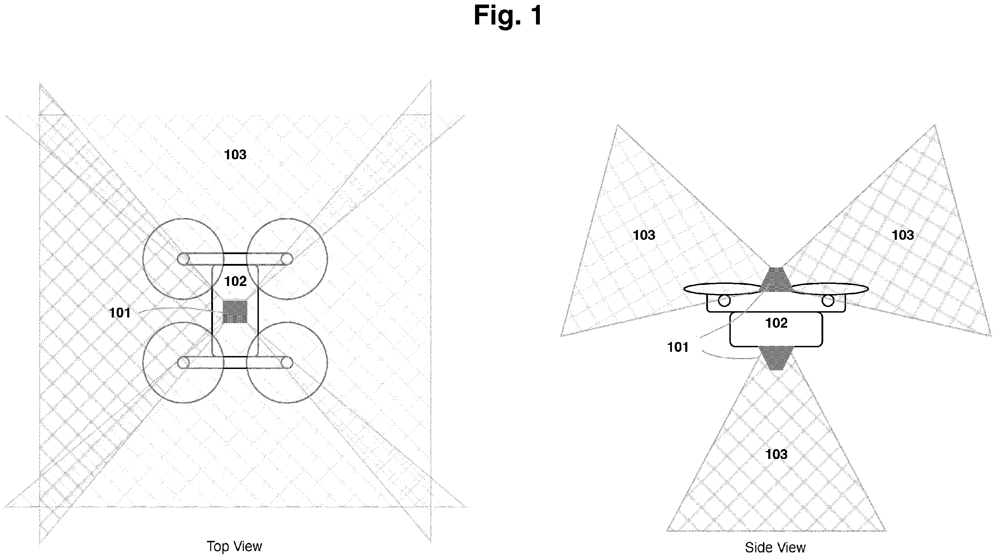

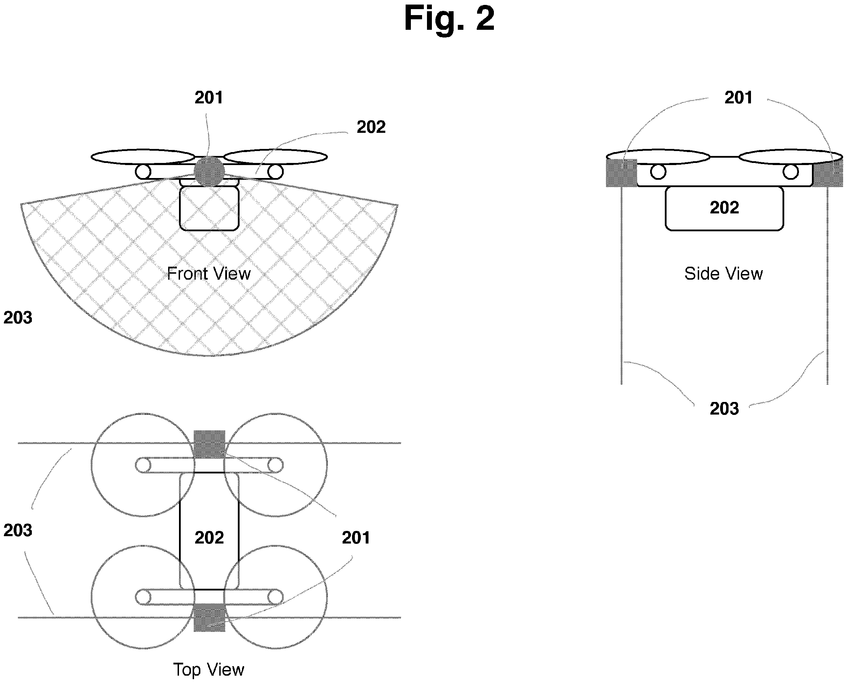

### 1. Navigation Sensor Initialization (See Fig. 1 and Fig. 2)

The ALS system initiates with the configuration of ToF cameras and LIDAR sensors to ensure precise environmental mapping and alignment with the wind turbine blade's leading edge.
- **Time-of-Flight (ToF) Cameras:** As depicted in **Fig. 1****,** multiple ToF cameras (101) are mounted atop of a unmanned aerial vehicle (UAV) (102) to provide 3D spatial mapping (103) for identifying the turbine's geometry and orientation. These cameras continuously scan the environment to detect the turbine structure, providing critical data for controlled localization and descend.
- **LIDAR Sensors:** Shown in **Fig. 2****,** two primary LIDAR units (201) are strategically positioned on the front and rear of the unmanned aerial vehicle (UAV) (202), enabling accurate tracking of the blade's leading edge (LE). In addition, an **array of downward-facing LIDAR sensors** (203) is mounted perpendicular to the UAV's body, oriented to detect the blade's position directly below. This array provides continuous distance measurements between the UAV and the blade surface, allowing for fine-tuned vertical adjustments during descent.

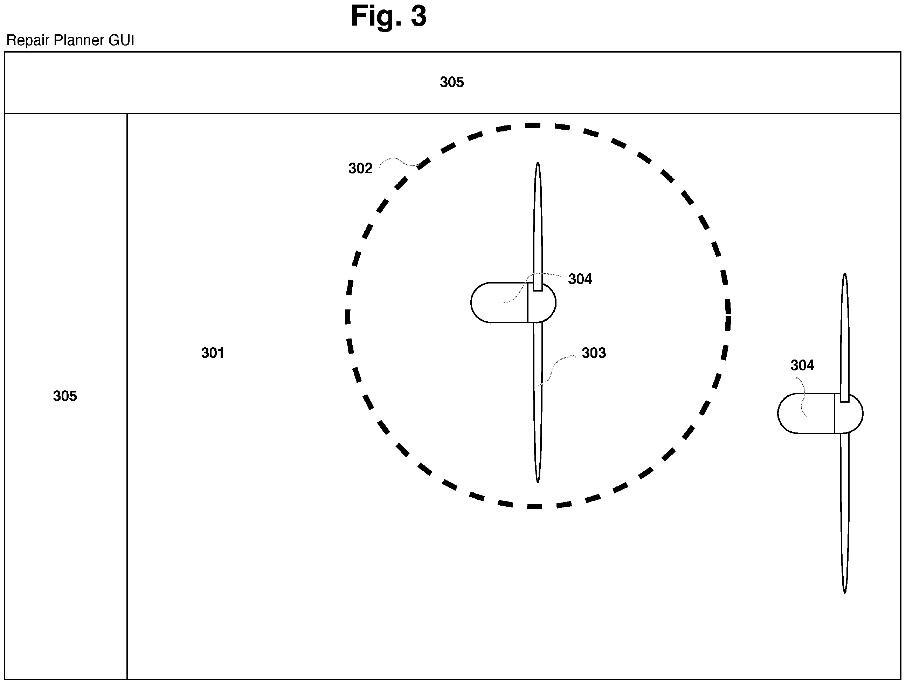

### 2. Work Zone Definition with Repair Planner GUI (See Fig. 3)

ALS includes an Operator Repair Planner GUI that provides a virtual work zone definition and ongoing diagnostic support.
- **Work Zone Definition:** In **Fig. 3****,** the Repair Planner GUI shows a map (301) of the environment with wind turbines (304) and allows the operator to set a virtual work zone (302) tailored to the specific turbine blade (303). This defined area (302) limits the unmanned aerial vehicle (UAV) 's operational space, ensuring it remains within the designated repair zone, an essential feature in multi-turbine environments.
- **Real-Time Monitoring:** The GUI displays live sensor data and environmental diagnostics (305), allowing the operator to monitor unmanned aerial vehicle (UAV) alignment and adjust as necessary. The GUI's interface also supports emergency override control for immediate operator intervention, if required.

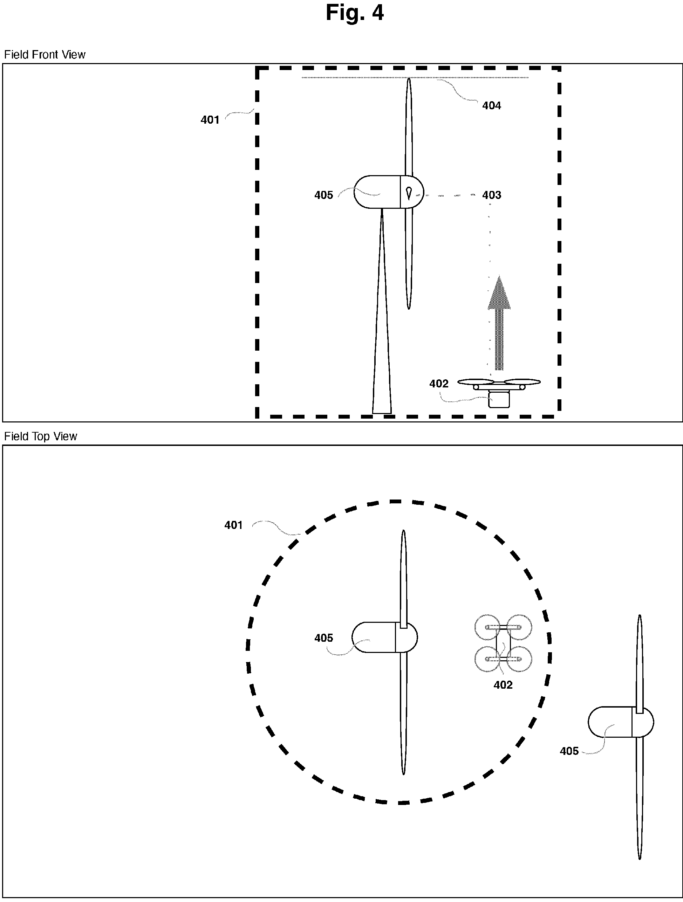

### 3. Environment Recognition and Obstacle Avoidance (See Fig. 4)

Upon deployment, the ALS system activates its environment recognition feature to assess nearby obstacles and determine safe operational limits (401).
- **Environmental Scanning:** The ALS guides the unmanned aerial vehicle (UAV) (402) to a pre-set altitude (403) where the environment recognition protocol initiates, as illustrated in **Fig. 4****.** ToF cameras and LIDAR sensors detect obstacles within the vicinity, including turbine components and surrounding structures (405), creating a spatial model for safe navigation.
- **Climbing Stop Altitude:** After detecting a clear area without obstacles, the ALS system marks a "Climbing Stop Altitude," (404) a pre-defined altitude at which the unmanned aerial vehicle (UAV) ceases vertical movement and prepares to approach the blade, mitigating the risk of collision with other structures.

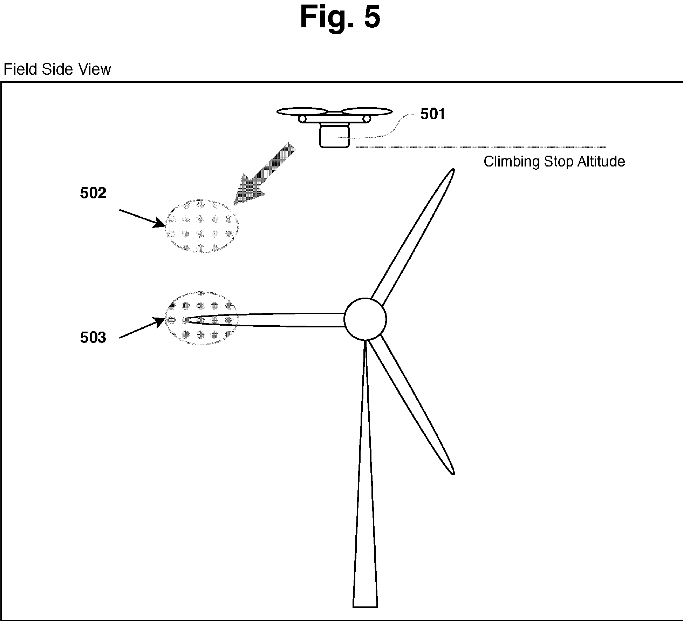

### 4. Leading Edge (LE) Start Positioning (See Fig. 5)

Following environment recognition, ALS directs the unmanned aerial vehicle (UAV) (501) to an initial position above the blade's leading edge (502) to establish a controlled descent path.
- **Initial Alignment:** As depicted in **Fig. 5****,** ALS calculates an initial alignment point above the leading edge (502), adjusting for blade curvature, environmental conditions, and the operator-defined work zone. This point serves as the reference for the controlled descent path, helping maintain stable alignment.
- **Path Establishment:** Using continuous LIDAR feedback, the ALS system aligns the unmanned aerial vehicle (UAV) (501) centrally above the leading edge (503), ensuring consistent positioning over the blades leading edge.

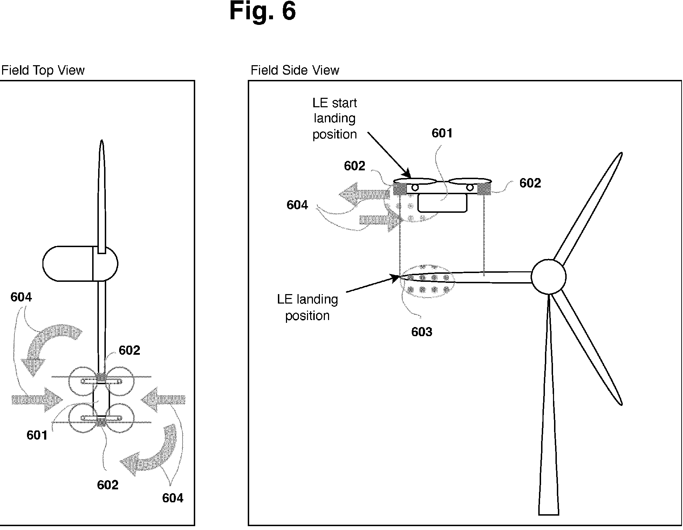

### 5. Blade Tip Detection and Descent Path Calculation (See Fig. 6)

ALS calculates the optimal descent path of the unmanned aerial vehicle (UAV) (601), dynamically adjusting alignment to ensure precise landing along the blade's leading edge.
- **Blade Tip Detection:** In **Fig. 6****,** ALS uses LIDAR (602) data to identify the blade tip (603). This detection allows the system to calculate the best landing position, considering factors such as blade curvature and alignment requirements, for stability near the blade tip.
- **Adaptive Descent Calculation:** The ALS system adjusts its descent path based on real-time feedback from sensors, maintaining alignment (604) with the blade's edge and dynamically correcting for variations in blade orientation. This calculated path ensures the unmanned aerial vehicle (UAV)'s (601) stable descent onto the blades leading edge.

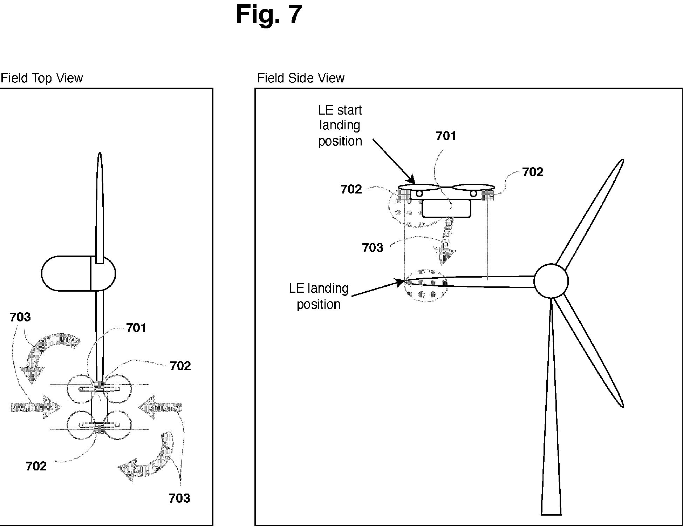

### 6. Tip Landing and Controlled Descent (See Fig. 7)

Upon identifying the optimal landing point, ALS initiates a controlled descent of the unmanned aerial vehicle (UAV) (701), maintaining precision along the blade's edge.
- **Controlled Descent Management:** Shown in **Fig. 7****,** ALS relies on LIDAR (702) feedback to adjust descent speed and alignment dynamically, ensuring precise positioning (703) on the narrow surface. This step is critical for maintaining balance over the edge during landing.
- **Emergency Override:** The system includes an operator-controlled emergency override, allowing the operator to assume control if environmental conditions change unexpectedly, ensuring safety during the entire descent phase.

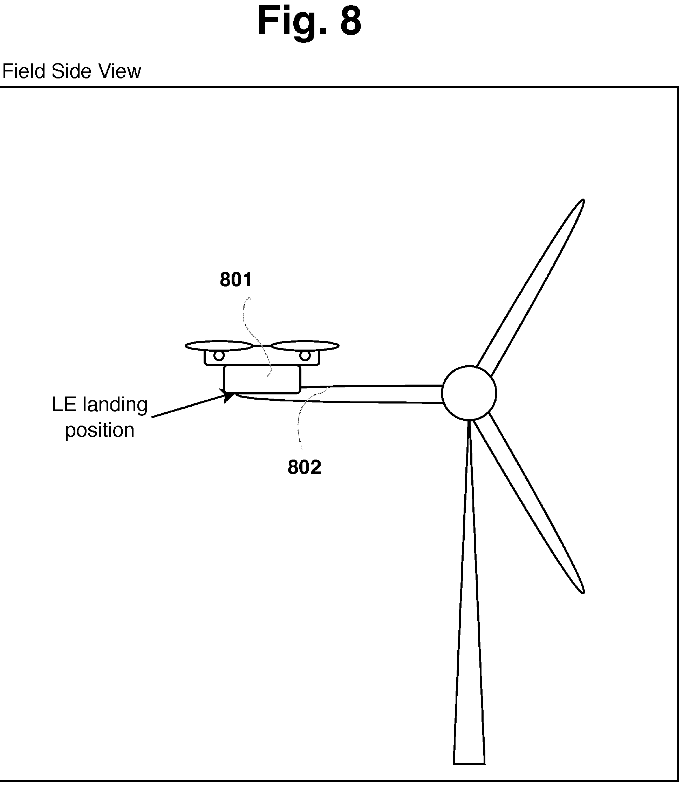

### 7. Edge Stabilization Mode (See Fig. 8)

Once landed, ALS activates edge stabilization to maintain the unmanned aerial vehicle (UAV)'s (801) secure position on the blade's leading edge (802) for repair operations.
- **Dynamic Stabilization:** As shown in **Fig. 8****,** ALS continuously adjusts to counteract minor wind fluctuations, blade vibrations, or other environmental conditions, securing the unmanned aerial vehicle (UAV) 's position along the leading edge for the duration of the maintenance task.
- **Emergency Repositioning:** If ALS detects potential instability or environmental shifts, it allows the operator to disengage stabilization and reposition the unmanned aerial vehicle (UAV) (801) safely, prioritizing operational safety.

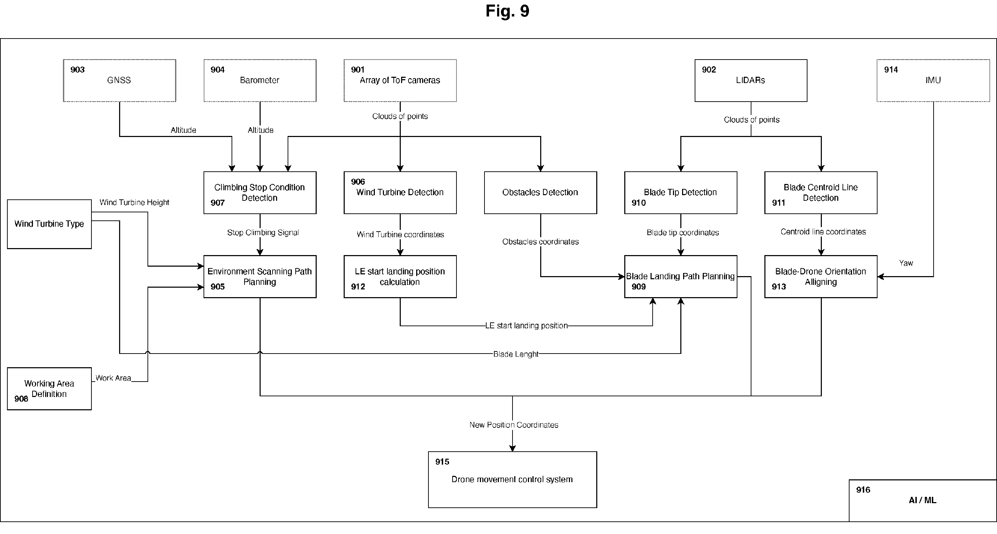

### 8. Description of the ALS System Block Diagram Procedure (See Fig. 9)

**Fig. 9** presents the Assisted Landing System (ALS) block diagram, illustrating the essential components and their interactions within the unmanned aerial vehicle (UAV) for effective alignment, landing, and stabilization on the wind turbine blade. Each module in the system performs a key role in enabling precise positioning and stability during UAV-based maintenance tasks.
**1. Sensor Array Module:** This module comprises the UAV's primary sensors for environmental awareness and blade detection:
   - **Array of ToF Cameras (901):** Positioned to capture a 3D map of the environment, these ToF cameras provide spatial data for blade and obstacle detection.
   - **LIDAR Units (902):** Placed at strategic positions on the UAV, the LIDAR sensors track the leading edge (LE) of the blade, enabling real-time alignment adjustments. Additional downward-facing LIDAR arrays measure vertical distance to the blade surface, supporting stable descent.
   - **GNSS (Global Navigation Satellite System) (903)** and **Altitude Barometer (904):** These sensors contribute to accurate altitude control and geolocation of the UAV in relation to the wind turbine's coordinates and height.
2. **Environment Scanning and Detection Module (905):** This module processes data from the sensor array to perform environment scanning and obstacle detection. It includes:
   - **Wind Turbine Detection (906):** Identifies the turbine's location and dimensions, using GNSS and pre-stored turbine coordinates.
   - **Climbing Stop Condition Detection (907):** Determines when the UAV reaches a clear, obstacle-free altitude, marking a safe approach point.
   - **Working Area Definition (908):** Establishes a virtual boundary around the turbine and blade to maintain UAV operation within safe limits.
3. **Blade and Path Planning Module (909):** This module calculates the UAV's optimal approach path and landing point on the blade, using data on blade geometry and position:
   - **Blade Tip Detection (910):** Detects the blade tip, serving as a reference for approach and landing calculations.
   - **Blade Centroid Line Detection (911):** Calculates the blade's central line to align the UAV for stable positioning.
   - **Landing Path Planning (912):** Establishes a trajectory based on the blade's orientation and LE start position, ensuring the UAV aligns for a precise landing.
4. **Descent and Alignment Control Module (913):** This module utilizes the processed data for controlled descent and yaw alignment with the blade's leading edge:
   - **IMU (Inertial Measurement Unit) (914):** Monitors the UAV's orientation and movement, assisting with fine adjustments for alignment.
   - **Yaw and Descent Control (915):** Actively controls the UAV's descent speed and yaw axis alignment to maintain a centered position over the blade's leading edge.
5. **AI/ML Prediction Module (916):** Using Al and machine learning, this module predicts blade oscillation patterns and adjusts the UAV's descent and alignment based on real-time movement. It receives input on environmental factors and blade dynamics to model oscillation and provides anticipatory guidance to stabilize the UAV during approach.

## Claims

1. **An assisted landing system (ALS) for unmanned aerial vehicle (UAV) s,** comprising:
**One or more sensors configured to provide positional and alignment data,** including but not limited to LIDAR, time-of-flight (ToF) cameras, 3D cameras, vision cameras, or other distance or imaging sensors, designed to guide the unmanned aerial vehicle (UAV) in aligning with and descending onto the leading edge of a wind turbine blade that may be positioned at various angles.

2. **The ALS of claim 1, wherein the system provides real-time sensor feedback,** enabling precise yaw alignment of the unmanned aerial vehicle (UAV) 's central axis with the blade's leading edge, regardless of the blade's orientation, allowing for consistent landing even when the blade is not horizontal.

3. **The ALS of claim 1, configured with adaptive descent control,** wherein the system autonomously adjusts the descent rate and position based on real-time data from sensors, maintaining continuous alignment with the blade's leading edge during descent.

4. **The ALS of claim 1, comprising a dual-mode functionality,** wherein the system operates: (a) **In operator-assisted mode,** providing manual control with sensor-guided alignment to facilitate operator-managed descent and landing; (b) **In fully autonomous mode,** enabling the system to manage the unmanned aerial vehicle (UAV) 's approach, alignment, descent, and stabilization without operator intervention, based on continuous data feedback from the integrated sensors.

5. **The ALS of claim 1, wherein the system includes an edge stabilization mode,** activating upon blade contact to maintain the unmanned aerial vehicle (UAV) 's stability on the blade's leading edge across variable blade angles, enabling the unmanned aerial vehicle (UAV) to remain securely positioned for subsequent maintenance tasks.

6. **The ALS of claim 1, wherein the system autonomously recognizes the blade's tip and sets an optimal landing approach path** based on the blade's orientation and tangent angle, selecting a landing position that maximizes stability while allowing for variable blade angles during alignment.

7. **The ALS of claim 1, further comprising environment recognition capabilities** that establish a virtual operational boundary (work area), ensuring the unmanned aerial vehicle (UAV) operates within predefined spatial limits to minimize interference with adjacent turbines and optimize landing within multi-turbine environments.

8. **The ALS of claim 1, wherein the system supports operation in various environmental conditions,** allowing secure landings on turbine blades at angles from horizontal up to ±20 degrees in pitch, and facilitating operation in wind speeds above 14 m/s and temperatures from -18°C to +50°C.

9. **The ALS of claim 1, wherein the system includes obstacle detection and altitude control mechanisms,** automatically adjusting the unmanned aerial vehicle (UAV) 's altitude based on environmental data to avoid obstacles, defining a "Climbing Stop Altitude" at which the ALS initiates descent onto the blade.

10. **The ALS of claim 1, wherein the system employs adaptive stabilization for blade** angles that deviate from a horizontal orientation, automatically correcting the unmanned aerial vehicle (UAV) 's position to maintain stable contact and alignment on the leading edge during the repair process.

11. **The ALS of claim 1, further comprising an algorithm based on artificial intelligence (AI) and machine learning (ML),** configured to predict real-time oscillation patterns of the wind turbine blade, providing anticipatory adjustments to the unmanned aerial vehicle (UAV) 's alignment and descent path.

12. **The ALS of claim 11, wherein the algorithm receives sensor data from the ALS** and analyzes blade movement to generate predictive models of blade oscillation, enabling the system to dynamically adjust the unmanned aerial vehicle (UAV) 's approach trajectory for precise landing on the blade's leading edge.

13. **The ALS of claim 11, wherein the predictive algorithm calculates positional adjustments** for the unmanned aerial vehicle (UAV) based on anticipated blade movement, thereby enhancing stability during approach and landing, particularly under variable environmental conditions.

14. **The ALS of claim 11, wherein the Al and ML-based prediction system continuously updates** its blade oscillation model in real-time, allowing the unmanned aerial vehicle (UAV) to adapt its approach and descent path in response to blade oscillation, reducing risks associated with sudden blade position shifts.
